# EUROPEAN PATENT APPLICATION

(11) **EP 4 763 495 A1**
(43) Date of publication of application: **24.06.2026**
(21) Application number: 24307274.1
(22) Date of filing: 23.12.2024
(51) Int. Cl.: B29D 11/00

(54) **OPHTHALMIC ARTICLE**

(71) Applicant: Essilor International, 94220 Charenton-Le-Pont (FR)
(72) Inventor: FROMENTIN, Pierre, 10240 BANGKOK (TH); KONGTARA, Nisachon, 10160 BANGKOK (TH)
(74) Representative: Plasseraud IP

(57) **Abstract**

The present invention relates to an ophthalmic article (10) comprising: an ophthalmic wafer (11) with a first face (111), a second face (112) opposite the first face and microstructures(114), the microstructures being either on the first face or between the first face and the second face; an adhesion promotion layer (13) on the first face of the ophthalmic wafer; a lens substrate (12) in contact with the adhesion promotion layer; wherein the adhesion promotion layer comprises an adhesive promoter having at least one of the following functional groups: -NH2, -SH, -NCO and -OH. The present invention also relates to a method for manufacturing the ophthalmic article.

## Description

### Technical Field

This disclosure pertains to the field of ophthalmic articles and method for manufacturing ophthalmic articles. More in particular, the present disclosure pertains to the field of ophthalmic articles having an ophthalmic wafer with microstructure on one of its face, and a lens substrate supporting the ophthalmic wafer, as well as method for manufacturing same.

### Background Art

Some ophthalmic lenses today comprise optical elements or microstructures on one of their faces. Further a hard coat or a varnish is usually applied onto the outer faces of the ophthalmic lenses to provide them with the vest possible protection. Unfortunately, the hard coat may change or damage the optical design and shape of these optical elements or microstructures resulting in an impaired properties of the ophthalmic lenses and in particular, the optical elements or microstructures are no longer able to provide their optical effect.

Thus, one alternative has been to encapsulate the optical elements or microstructures with a lens substrate provided on the face of a thermoplastic wafer bearing the optical elements or microstructures. The other face of the thermoplastic wafer can then receive the hard coat or any other treatment without impairing the properties of the optical elements or microstructures.

However, since the materials of the wafer and the substrate are different, adhesion issues can occur causing separation of the thermoplastic wafer form the lens substrate. Such separation renders the ophthalmic article improper for its intended purposes.

### Summary

This disclosure improves the situation.

The present disclosure provides an ophthalmic article comprising:
an ophthalmic wafer with a first face, a second face opposite the first face and microstructures, the microstructures being either on the first face or between the first face and the second face;
an adhesion promotion layer on the first face of the ophthalmic wafer;
a lens substrate in contact with the adhesion promotion layer;
wherein the adhesion promotion layer comprises an adhesive promoter having at least one of the following functional groups: -NH₂, -SH, -NCO and -OH.

Thanks to the adhesion promotion layer comprising an adhesive promoter having at least one of the mentioned functional groups, the adhesion between the ophthalmic wafer and the lens substrate may be increased. This is particularly true when the ophthalmic wafer is a polycarbonate ophthalmic wafer and the lens substrate a thermoset lens substrate.

Other optional and non-limiting features are as follows.

The ophthalmic wafer may be made of a thermoplastic resin or a thermoset resin.

The microstructures may be microlenses.

The first face may be a concave face or a convex face.

The adhesive promoter may be a silane, preferably γ-aminopropyltriethoxysilane.

The ophthalmic article may further comprise a hard coat on the second face of the ophthalmic wafer. Alternatively, the ophthalmic article further comprises a second adhesion promotion layer on the second face of the ophthalmic wafer and a second lens substrate on the second adhesion promotion layer, wherein the second adhesion promotion layer comprises an adhesive promoter having at least one of the following functional groups: -NH₂, -SH, -NCO and -OH.

The present disclosure also provides a method for manufacturing the ophthalmic article as described above. The method comprises:
providing an ophthalmic wafer having a first face, a second face opposite the first face and microstructures, the microstructures being either on the first face or between the first face and the second face;
forming an adhesion promotion layer on the first face of the ophthalmic wafer with an adhesion promotion composition;
forming a lens substrate against the adhesion promotion layer;
wherein the adhesion promotion composition comprises an adhesive promoter having at least one of the following functional groups: -NH₂, -SH, -NCO and -OH.

Other optional and non-limiting features are as follows.

The adhesive promoter may be a silane, preferably γ-aminopropyltriethoxysilane.

The ophthalmic wafer may comprise a wafer edge between the first face and the second face, forming an ophthalmic layer may comprise:
providing a mold part having a forming face and a mold edge extending from the shaping face;
forming a mold cavity between the adhesion promotion layer and the shaping face by taping the wafer edge and the mold edge together with an adhesive tape;
filling the mold cavity with a thermoset composition; and
   polymerizing the thermoset composition thereby obtaining the lens substrate.

The thermoset composition may comprise an isocyanate compound, a thiol compound, a catalyst, and a releasing agent.

The isocyanate compound may be an isocyanate monomer and the thiol compound may be a thiol monomer; wherein the thermoset composition may comprise a UV absorber compound and a bluing agent.

The method of claim 11, wherein the isocyanate compound may be an isocyanate oligomer and the thiol compound may be a thiol oligomer.

The method may further comprise hard coating the second face of the ophthalmic wafer with a hard coat. Alternatively, the method further comprises: forming a second adhesion promotion layer on the second face of the ophthalmic wafer using a second adhesion promotion composition; and forming a second lens substrate against the second adhesion promotion layer.

### Brief Description of Drawings

Other features, details and advantages will be shown in the following detailed description and on the figures, on which:
Fig. 1 is a schematic cross-section view of an exemplary ophthalmic article according to the invention.
Fig. 2 is a schematic cross-section view of another exemplary ophthalmic article according to the invention.
Fig. 3 is a diagram illustrating the method for manufacturing an ophthalmic article having an adhesion promotion layer between an ophthalmic wafer and a lens substrate.
Fig. 4 a schematic cross-section view of an exemplary ophthalmic wafer usable in the method of Fig. 3.
Fig. 5 a schematic cross-section view of an exemplary mold part usable in the method of Fig. 3.
Fig. 6 a schematic cross-section view of a mold assembly made with the ophthalmic wafer of Fig. 4 and the mold part of Fig. 5 bound together with an adhesive tape.
Fig. 7 is a diagram illustrating an example of providing a thermoset composition of Fig. 3.
Fig. 8 is a diagram illustrating an example of forming an isocyanate oligomer composition.
Fig. 9 is a diagram illustrating an example of forming a thiol oligomer composition.
Fig. 10 is a diagram illustrating an example of forming an isocyanate mixture (Part A) of Fig. 8
Fig. 11 is a diagram illustrating an example of forming a thiol mixture (Part B) of Fig. 8.
Fig. 12 is a diagram illustrating an example of combining Part A and Part B of Fig. 3.
Fig. 13 is a diagram illustrating an example of forming the adhesion promotion layer of Fig. 3.
Fig. 14 is a diagram illustrating an example of obtaining a lens substrate of Fig. 3.
Fig. 15 is a diagram illustrating an example of forming a mold cavity of Fig. 15.
Fig. 16 is a diagram illustrating an example of forming a lens substrate of Fig. 15.

### Description of Embodiments

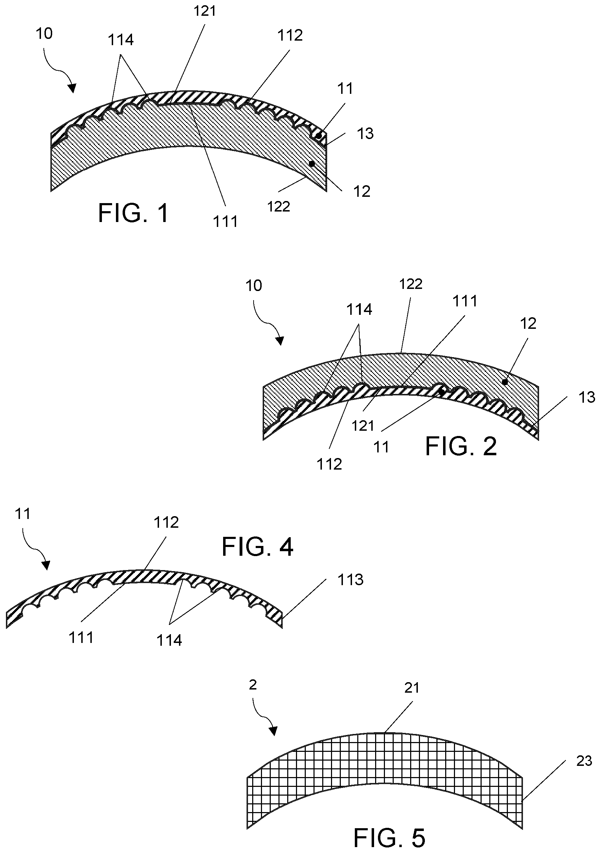

An ophthalmic article according to the invention will now be described in more details with reference to Fig.1 and Fig. 2. Here, the ophthalmic article **10** may be an ophthalmic lens and as such may be used as one or both lenses of an eyewear such as ophthalmic glasses.

The ophthalmic article **10** comprises an ophthalmic wafer **11,** a lens substrate **12** and an adhesion promotion layer **13.**

The ophthalmic wafer **11** comprises a first face **111,** a second face **112** opposite the first face **111,** a wafer edge **113** joining the first face **111** and the second face **112,** and microstructures **114.**

The microstructures **114** may be located on the first face **111** or between the first face **111** and the second face **112.** In this latter case, the ophthalmic wafer **11** is typically a multilayer wafer with the microstructures **114** between two layers thereof.

The first face **11** may be a concave face (see Fig. 1) or a convex face (see Fig. 2).

The ophthalmic wafer **11** may be typically made of a thermoplastic material or a thermoset material, generally chosen from transparent materials of ophthalmic grade used in the ophthalmic industry. When the ophthalmic wafer **11** is made of a thermoset material, the thermoset material is different from the one constituting the substrate **12.**

Examples of thermoplastic material suitable for the ophthalmic wafer of the invention are polyamides, polyimides, polysulfones, polycarbonates, polyurethanes, polystyrenes, polyethylene terephthalate), polymethylmethacrylate (PMMA) and copolymers thereof. Preferred thermoplastic materials are polycarbonates.

Examples of thermoset materials suitable for the ophthalmic wafer of the invention are:
- (meth)acrylic or thio(meth)acrylic polymers and copolymers, in particular halogenated ones;
- polyethoxylated aromatic (meth)acrylates, such as those derived from bisphenol-A;
- urethane and thiourethane polymers and copolymers, resulting from the polymerization of at least one polyisocyanate and at least one polyol or polythiol (marketed, for instance, under the trade name Trivex^{®} by the PPG Industries company);
- epoxy polymers and copolymers (polyepoxides),
- episulfide polymers and copolymers, such as those resulting from the polymerization of least one polyepisulfide and at least one polythiol,
- resins resulting from polymerization or (co)polymerization of alkylene glycol bis allyl carbonates such as polymers and copolymers of diethylene glycol bis(allylcarbonate) (marketed, for instance, under the trade name CR-39^{®} by the PPG Industries company, the corresponding marketed lenses being referred to as ORMA^{®} lenses from ESSILOR).

Examples of urethane and thiourethane polymers and copolymers are resins resulting from polymerization of a polythiol and a poly(thio)isocyanate such as those are marketed by the Mitsui Toatsu Chemicals company as MR series, in particular MR6^{®}, MR7^{®} (refractive index of 1.67), MR8^{®} (refractive index of 1.60) and MR10^{®} resins. These materials as well as the monomers used for their preparation are especially described in the patents US 4,689,387, US 4,775,733, US 5,059,673, US 5,087,758 and US 5,191,055.

Examples of episulfide polymers and copolymers suitable for the ophthalmic wafer those having a refractive index of 1.74.

Preferred materials for the ophthalmic wafer **11** are polycarbonates.

When the ophthalmic wafer **11** is a multilayer ophthalmic wafer **11,** each one of the layers of the ophthalmic wafer **11** may be, independently from each other, made of a thermoplastic material of a thermoset material as described above.

For example, the multilayer ophthalmic wafer comprises a first layer with a microstructure bearing face and a second face opposite the microstructure bearing face, and a second layer with a microstructure bearing face and a second face opposite the microstructure bearing face, both microstructure bearing faces having surface shapes complementary to each other, the second face of the first layer being the first face **111** of the ophthalmic wafer **11** while the second face of the second layer is the second face **112** of the ophthalmic wafer **11.** Each one of the first and second layers of the ophthalmic wafer **11** may be made of a thermoplastic material or a thermoset material as described above. The only restriction is that they have different compositions.

The microstructures **114** may be provided over the whole ophthalmic wafer **11** or only on a part thereof. For ease of description, the part of ophthalmic wafer **11** free of microstructures **114** will be called microstructure free part and the part of the ophthalmic wafer **11** with the microstructures **114** will be called microstructure bearing part. For example, the microstructure free part may be a central part of the ophthalmic wafer **11,** while the microstructure bearing part may be a peripheral part of the ophthalmic wafer **11** surrounding the central part thereof.

The microstructures **114** are preferably homogenously distributed over the microstructure bearing part of the ophthalmic wafer **11.** For example, they are distributed over concentric cercles around the center of the ophthalmic wafer **11.**

The microstructures **114** are preferably microlenses as illustrated in Fig. 1 and Fig. 2. For example, each microlens is a portion of a sphere provided either as a recess (Fig. 1) or as a protrusion (Fig. 2) on the microstructure bearing face **111.** Preferably, the microlenses have myopia healing or mitigating properties. However, the microstructures **114** may provide any kind of functions according to the needs of the wearer.

The second face **112** of the ophthalmic wafer **11** may be convex or concave irrespective of the shape of the first face **111.** However, it is preferably convex when the first face **111** is concave and concave when the first face **111** is convex.

The lens substrate **12** is positioned facing the first face **111** of the ophthalmic wafer **11.** As such, the lens substrate **12** has a contact face **121** facing the first face **111** of the ophthalmic wafer **11** with the same geometry (concave or convex) as the first face **111** of the ophthalmic wafer **11.** The lens substrate **12** also has a second face **122** opposite the contact face **121.** The second face **122** of the lens substrate **12** may be concave (Fig. 1) or convex (Fig. 2) irrespective of the geometry of the contact face **121.**

The lens substrate **12** may be made of a thermoplastic material or a thermoset material, generally chosen from transparent materials of ophthalmic grade used in the ophthalmic industry.

Examples of thermoplastic materials usable for the lens substrate **12** of the invention are polyamides, polyimides, polysulfones, polycarbonates, polyurethanes, polystyrenes, polyethylene terephthalate), polymethylmethacrylate (PMMA) and copolymers thereof. Preferred thermoplastic materials are polycarbonates.

Examples of thermoset materials suitable for the lens substrate **12** of the invention are:
- (meth)acrylic or thio(meth)acrylic polymers and copolymers, in particular halogenated ones;
- polyethoxylated aromatic (meth)acrylates, such as those derived from bisphenol-A;
- urethane and thiourethane polymers and copolymers, resulting from the polymerization of at least one polyisocyanate and at least one polyol or polythiol (marketed, for instance, under the trade name Trivex^{®} by the PPG Industries company);
- epoxy polymers and copolymers (polyepoxides),
- episulfide polymers and copolymers, such as those resulting from the polymerization of least one polyepisulfide and at least one polythiol,
- resins resulting from polymerization or (co)polymerization of alkylene glycol bis allyl carbonates such as polymers and copolymers of diethylene glycol bis(allylcarbonate) (marketed, for instance, under the trade name CR-39^{®} by the PPG Industries company, the corresponding marketed lenses being referred to as ORMA^{®} lenses from ESSILOR).

Examples of episulfide polymers and copolymers suitable for the lens substrate **12** those having a refractive index of 1.74.

However, preferred material for the lens substrate **12** are urethane and thiourethane polymers and copolymers are resins resulting from polymerization of a polythiol and a poly(thio)isocyanate, in particular those of refractive index of 1.60 or 1.67. Examples of such urethane and thiourethane polymers and copolymers are marketed by the Mitsui Toatsu Chemicals company as MR series, in particular MR6^{®}, MR7^{®} (refractive index of 1.67), MR8^{®} (refractive index of 1.60) and MR10^{®} resins. These materials as well as the monomers used for their preparation are especially described in the patents US 4,689,387, US 4,775,733, US 5,059,673, US 5,087,758 and US 5,191,055.

The lens substrate **12** may also comprise a catalyst and a releasing agent.

Examples of catalysts are alkyltins, alkyltin oxides, metal coordination complexes or amines. Examples of alkyltins are dibutyltin dichloride and dimethyltin dichloride (DMC). A preferred proportion for alkyltins is 0.02 to 2 % by weight with respect to the total weight of polymerizable compounds present in the composition.

Another example of catalysts is a composition comprising: 18-crown-6 (CAS N° 17455-13-9), 2-mercaptoethanol and potassium thiocyanate. Notably compositions comprising:
- 31 to 38 wt.%, in particular 33 to 37 wt.% 18-crown-6;
- 50 to 62 wt.%, in particular 54 to 60 wt.% 2-mercaptoethanol; and
- 7 to 9.5 wt.%, in particular 8 to 9 wt.% potassium thiocyanate.

Compared to a catalyst based on tin, the rate of polymerization of this catalyst composition is higher. When combined with an oligomer system, it accelerates the rate of polymerization, reducing the polymerization time from 19/20 hours to 3 hours. A preferred proportion for this catalyst composition is 0.02 to 2 wt.% with respect to the total weight of polymerizable compounds present in the polymerizable composition leading to the material of the lens substrate **12.**

A releasing agent is a compound used to prevent materials from bonding to surfaces. Releasing agents aid in processes involving mold release and plastic release. Releasing agents are one of many additives used in the production of plastics. Releasing agent provides a barrier between a molding surface and the substrate, facilitating separation of the cured part from the mold. Examples of releasing agents are alkoxylated phosphate esters, waxes, fatty ester, silicones, and metallic soaps, preferably alkoxylated phosphate esters (such as Zelec UN from Stepan).

In some cases, the lens substrate **12** may further comprise at least one of a UV absorber and bluing agent.

UV absorbers help in reducing or preventing UV light from reaching the retina (in particular in ophthalmic lens materials), but also to protect the substrate material itself, thus preventing it from weathering and becoming brittle and/or yellow. Said UV absorber also limits or even eliminates photo-degradation of dyes and absorbers contained in the substrate. It can also be incorporated into a coating present at the surface of the optical article.

The UV absorber that may be used in the present invention preferably has the ability to at least partially block light having a wavelength shorter than 400 nm, preferably UV wavelengths below 385 or 390 nm.

One example of UV absorber is 2-(2-hydroxy-5-methylphenyl)benzotriazole.

Bluing agent help in having an optical article with a cosmetically acceptable appearance for the wearer/user and when viewed by an external observer, in particular perceived as mostly color neutral. Indeed, blue light blocking means such as dyes or specific UV absorbers that can be present in the polymerizable composition tend to produce a color tint in the optical article as a "side effect", the latter appearing yellow, brown or amber if no color balancing means is employed.

In the present invention, the bluing agent is a compound having an absorption band in the visible light spectrum in the orange to yellow wavelength region and manifesting a color from blue to violet. Examples of bluing agents can be found in WO 2017/077358, in the name of the applicant. One particular example is C.I.Solvent Violet 33 (CAS N° 86090-40-6).

The bluing agent is generally used in an amount sufficient to adjust the hue of the optical material, typically from 0.01 to 5 wt.%, more preferably from 0.1 to 2 wt.%, relative to the weight of the lens substrate composition.

The lens substrate **12** may be made from a monomer thermoset composition comprising: 46.9 - 57.3 wt.%, in particular 49.5 - 54.7 wt.%, isocyanate monomer;
42.4 - 51.8 wt.%, in particular 44.8- 49.5 wt.%, thiol monomer;
0.009 - 0.011 wt.%, in particular 0.0095 - 0.0105 wt.%, catalyst;
0.9-0.11 wt.% in particular 0.95-0.105 wt.%, releasing agent;
1.12-1.38 wt.%, in particular 1.19-1.31 wt.%, UV absorber; and
0.72-0.88 wt.% in particular 0.76-0.84 wt.%, bluing agent.

Alternatively, the lens substrate **12** may be made from a oligomer thermoset composition comprising:
47.2-57.7 wt.%, in particular 49.8-55.1 wt.%, isocyanate oligomer composition;
42.7-52.2 wt.%, in particular 45.1-49.9 wt.%, thiol oligomer composition;
0.41-0.50 wt.%, in particular 0.43-0.47 wt.%, catalyst; and
0.09-0.11 wt.%, in particular 0.095-0.105 wt.%, releasing agent.

Here, the isocyanate oligomer composition refers to a composition having as major component isocyanate oligomers. Other components may be present, notably a smaller fraction of thiol monomer or thiol oligomer.

Here, the thiol oligomer composition refers to a composition having as major component thiol oligomers. Other components may be present, notably a smaller fraction of isocyanate monomer or isocyanate oligomer.

The oligomer thermoset composition may further comprise a UV absorber and a bluing agent.

The isocyanate oligomer composition may be obtained from an isocyanate monomer and a thiol monomer at a functional group ratio (isocyanate:thiol) of 6:1 to 8:1, preferably 7:1.

The thiol oligomer composition may be obtained from an isocyanate monomer and a thiol monomer at a functional group ratio (isocyanate:thiol) of 1:7 to 1:9, preferably 1:8.

The adhesion promotion layer **13** enhances adhesion of the ophthalmic wafer **11** to the lens substrate **12.** As such it contacts both the ophthalmic wafer **11** and lens substrate **12.** The adhesion promotion layer **13** comprises an adhesive promoter having at least one of the following functional groups: -NH₂, -SH,-NCO and -OH.

Preferably, the adhesive promoter is a silane with at least one of the following functional groups: -NH₂ (notably aminosilanes), -SH (notably mercaptosilanes),-NCO (notably isocyanate silanes) and -OH. As such, these adhesive promoters comprise two reactive groups, the first one already mentioned and -O-Si-O-. Thanks to this bi-functional characteristic, the adhesion promoter reacts with the material of the ophthalmic wafer and that of the lens substrate during polymerization, thus creating a bond network and enhancing adhesion between the two dissimilar or incompatible materials of the ophthalmic wafer and lens substrate.

Among silanes with a -NH₂ functional group, aminosilanes which are organosilanes comprising at least one amine group connected to the silicon atom through at least one carbon atom are preferred. The aminosilane is preferably an alkoxysilane bearing at least one amine group including one -NH₂, more preferably a trialkoxysilane bearing at least one amine group including one -NH₂. Non-limiting examples of aminosilanes are primary aminoalkyl silanes, secondary aminoalkyl silanes and bis-silylalkyl amines, in particular 3-aminopropyltrimethoxysilane, 3-aminopropyltriethoxysilane,N-β-(aminoethyl)-γ-aminopropyltrimethoxysilane (H₂NCH₂CH₂NHCH₂CH₂CH₂Si(OCH₃)₃), bis-trimethoxysilylpropylamine, and the triaminofunctional compound of formula H₂NCH₂CH₂NHCH₂CH₂NHCH₂CH₂CH₂Si(OCH₃)₃. Particularly preferred is γ-aminopropyltriethoxysilane.

Among silanes with a -SH functional group, mercaptosilane which are organosilanes comprising at least one mercapto (-SH) group connected to the silicon atom through at least one carbon atom are preferred. The mercaptosilane is preferably an alkoxysilane bearing at least one mercapto group, more preferably a trialkoxysilane bearing at least one mercapto group, still more preferably a mercaptoalkyl trialkoxysilane. Particularly preferred mercaptosilanes are 3-mercaptopropyltrimethoxysilane and 3-mercaptopropyltriethoxysilane.

Among silanes with a -NCO group, isocyanatesilane which are organosilanes comprising at least one isocyanate (-NCO) group connected to the silicon atom through at least one carbon atom are preferred. The isocyanate silane is preferably an alkoxysilane bearing at least one isocyanate group, more preferably a trialkoxysilane bearing at least one isocyanate group.

The adhesive promoter is preferably used in a concentration of 5 wt.% in deionized water.

In some embodiments, the ophthalmic article may further comprise a hard coat on the second face **112** of the ophthalmic wafer **11.**

The hard coat may be provided using known methods and is not further detailed here.

Alternatively, the ophthalmic article **10** comprises a second adhesion promotion layer on the second face of the ophthalmic wafer and a second lens substrate on the second adhesion promotion layer.

The second adhesion promotion layer may have the same features as described above for the first adhesion promotion layer, while being identical or different from the first adhesion promotion layer.

The second lens substrate may have the same features as described above for the first lens substrate, while being identical or different from the first lens substrate.

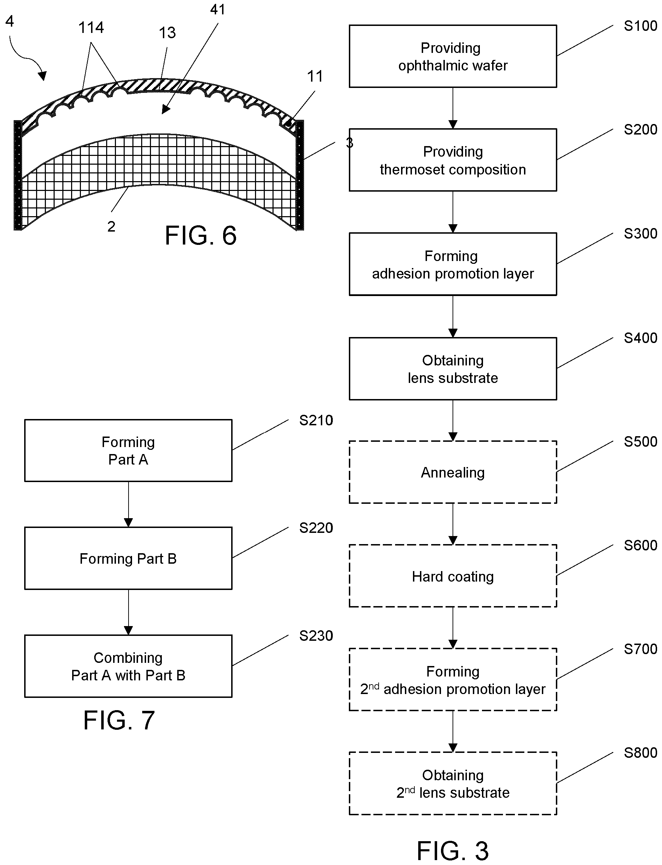

A method for manufacturing the ophthalmic article described above, in particular with a thermoset substrate, will now be described with reference to Fig. 3 to Fig. 16.

The method comprises (Fig. 3):
providing **S100** an ophthalmic wafer **11** as described above;
providing **S200** a thermoset composition;
forming **S300** an adhesion promotion layer **13** as described above on the first face **111** of the ophthalmic wafer **11;** and
obtaining **S400** a lens substrate **12** onto the adhesion promotion layer **13** using the thermoset composition.

Providing **S200** a thermoset composition may comprise (Fig. 7):
forming **S210** an isocyanate mixture (Part A);
forming **S220** a thiol mixture (Part B);
Combining **S230** Part A with Part B.

The thermoset composition may be the monomer thermoset composition as described above. In which case, Part A comprises the isocyanate monomer, the catalyst, the releasing agent and the UV absorber and Part B comprises the thiol monomer and the bluing agent.

Preferably, the isocyanate monomer is a diisocyanate monomer, for example m-xylylene diisocyanate.

The thiol monomer is preferably a tri-thiol monomer, for example 2,3-bis((2-mercaptoethyl)thio)-1-propanethiol.

Alternatively, the thermoset composition may be the oligomer thermoset composition as described above. In which case, Part A comprises the isocyanate oligomer composition, the releasing agent and the UV absorber and Part B comprises the thiol oligomer composition, the catalyst and the bluing agent. In this latter case, forming **S210** the isocyanate mixture comprises forming **S211** the isocyanate oligomer composition.

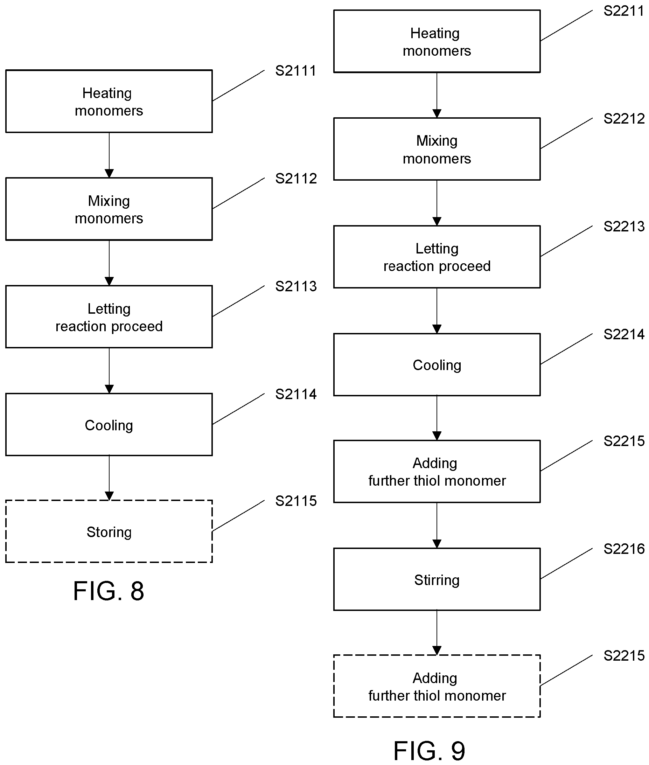

Typically, forming **S211** the isocyanate oligomer composition may comprise (Fig. 8): heating **S2111** an isocyanate monomer and a thiol monomer to a reaction temperature;
mixing **S2112** the isocyanate monomer with the thiol monomer so that isocyanate functional groups are in excess in comparison with thiol functional groups;
letting **S2113** the reaction proceed at reaction temperature;
cooling **S2114** the mixture to room temperature.

Preferably, the isocyanate monomer is a diisocyanate monomer, for example m-xylylene diisocyanate.

The reaction temperature may be 110 to 130 °C, preferably it is 115 to 120 °C.

The thiol monomer is preferably a tri-thiol monomer, for example 2,3-bis((2-mercaptoethyl)thio)-1-propanethiol.

The thiol monomer may be added at a functional group ratio (isocyanate:thiol) of 6:1 to 8:1, for example 7:1.

Letting **S2113** the reaction proceed at the reaction temperature enables polymerization of the monomers to obtain isocyanate oligomers. Thiol oligomers should not form or at least in a marginal amount because of the excess of isocyanate oligomer. Letting **S2113** the reaction proceed at the reaction temperature may be carried out during 2 to 5 hours, preferably 2.5 to 4.5 hours, for example about 3.5 hours.

Room temperature refers to a temperature of 20 to 25 °C. Cooling **S2114** is preferably passive: i.e. the hot mixture is let at room temperature until its temperature reaches the room temperature.

If the isocyanate oligomer composition is not directly used, it may be stored. In such case, forming **S211** the isocyanate oligomer composition may further comprise storing **S2115** the isocyanate oligomer composition.

Further, still in the case where the thermoset composition is the oligomer thermoset composition, forming **S220** the thiol mixture may comprise forming **S221** the thiol oligomer composition. In such case, Forming **S221** the thiol oligomer composition may comprise (Fig. 9): heating **S2211** a thiol monomer and an isocyanate monomer to a reaction temperature; mixing **S2212** the thiol monomer with the isocyanate monomer so that thiol functional groups are in excess in comparison with isocyanate functional groups;
letting **S2213** the reaction proceed at the reaction temperature;
cooling **S2214** the mixture to room temperature;
adding **S2215** further thiol monomer; and
stirring **S2216** the mixture at room temperature.

The thiol monomer is preferably a tri-thiol monomer, for example for example 2,3-bis((2-mercaptoethyl)thio)-1-propanethiol.

The reaction temperature may be 80 to 110 °C, preferably 90 to 100 °C.

Preferably, the isocyanate monomer is a diisocyanate monomer, for example m-xylylene diisocyanate.

Preferably still, the isocyanate monomer and the thiol monomer used in forming **S210** the isocyanate oligomer composition are used in forming **S220** the thiol oligomer composition.

In mixing **S2212** the thiol monomer with the isocyanate monomer, the resulting functional group ratio (isocyanate:thiol) may be 1:5 to 1:7, for example 1:6.

Letting **S2213** the reaction proceed at the reaction temperature enables polymerization of the monomers to obtain thiol oligomers. Isocyanate oligomers should not form or at least in a marginal amount because of the excess of thiol oligomer. Letting **S2213** the mixture sit at the reaction temperature may be carried out during 2 to 5 hours, preferably 2.5 to 4.5 hours, for example about 3.5 hours.

Room temperature refers to a temperature of 20 to 25 °C. Cooling **S2214** is preferably passive: i.e. the hot mixture is let at room temperature until its temperature reaches the room temperature.

Adding **S2215** further thiol monomer is carried out so that the functional group ratio (isocyanate:thiol) becomes 1:7 to 1:9, for example 1:8.

The purpose of stirring **S2216** the mixture at room temperature is to homogenize the composition after the addition of thiol monomer. Stirring **S2216** the mixture at room temperature may be carried out for 2 to 3 hours.

If the thiol oligomer composition is not directly used, it may be stored **S2217.**

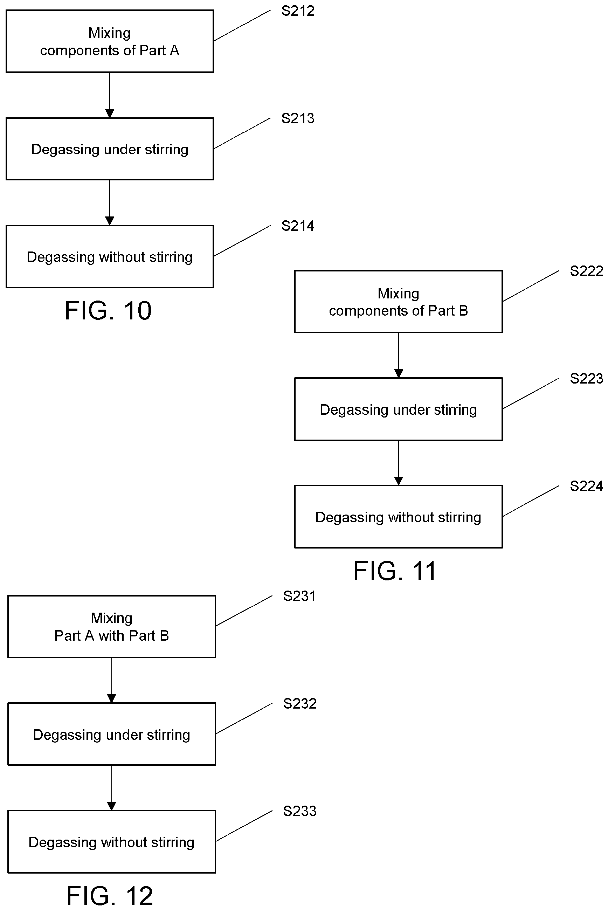

In all cases, forming Part A may comprise (Fig. 10):
mixing **S212** all components of Part A together;
degassing under stirring **S213;** and
degassing without stirring **S214.**

Degassing under stirring **S213** may be performed at a temperature of 1 to 5 °C, preferably 2 to 4 °C. Degassing under stirring **S213** is preferably carried out for 30 min to 1.5 hours.

Degassing without stirring **S214** may be performed at a temperature of 1 to 5 °C, preferably 2 to 4 °C. Degassing without stirring **S214** is preferably carried out for 10 to 20 min.

Forming Part B may comprise (Fig. 11):
mixing **S222** all components of Part B together;
degassing under stirring **S223;** and
degassing without stirring **S224.**

Degassing under stirring **S223** may be performed at a temperature of 1 to 5 °C, preferably 2 to 4 °C. Degassing under stirring **S223** is preferably carried out for 30 min to 1.5 hours.

Degassing without stirring **S224** may be performed at a temperature of 1 to 5 °C, preferably 2 to 4 °C. Degassing without stirring **S224** is preferably carried out for 10 to 20 min.

Combining **S230** Part A with Part B may comprise (Fig. 12):
mixing **S231** Part A with Part B;
degassing under stirring **S232;** and
degassing without stirring **S233.**

Mixing **S231** Part A with Part B may be carried out so that the weight ratio (Part APart B) is 45:55 to 55:45.

Degassing under stirring **S232** may be performed at a temperature of 1 to 5 °C, preferably 2 to 4 °C. In the case of the monomer thermoset composition, degassing under stirring **S232** is preferably carried out for up 15 to 45 min. In the case of the oligomer thermoset composition, degassing under stirring **S232** is preferably carried out for up to 8 min.

Degassing without stirring **S233** may be performed at a temperature of 1 to 5 °C, preferably 2 to 4 °C. In the case of the monomer thermoset composition, degassing without stirring **S233** is preferably carried out for up 10 to 20 min. In the case of the oligomer thermoset composition, degassing without stirring **S233** is preferably carried out for up to 5 min.

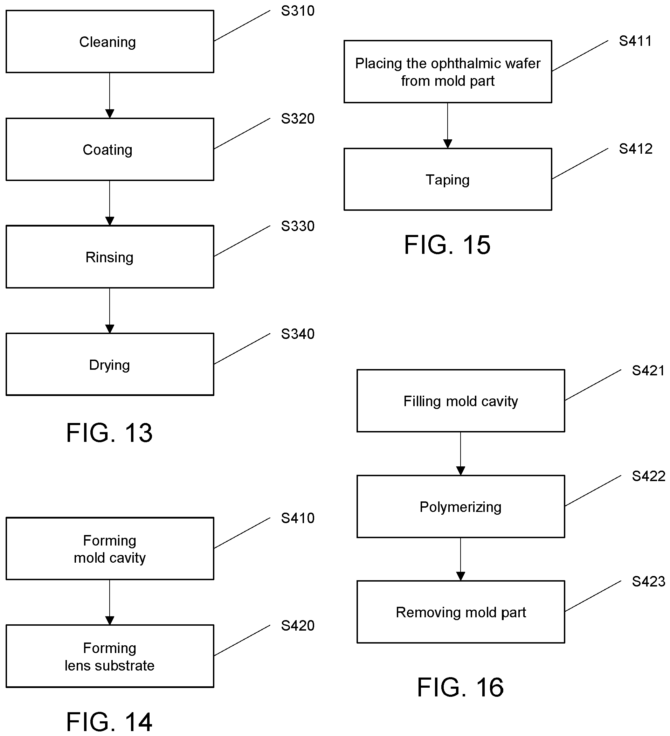

Forming **S300** an adhesion promotion layer **13** on the first face **111** of the ophthalmic wafer **11** may comprise (Fig. 13):
cleaning **S310** the first face **111** of the ophthalmic wafer **11;**
coating **S320** the cleaned first face **111** with the adhesion promotion composition; and rinsing **S330** excess coating composition; and
drying **S340.**

Cleaning **S310** may be performed using a detergent solution and rinsing once or more with deionized water. This operation may be carried out at a temperature of 55 to 65 °C.

Coating **S320** may be performed at a temperature of 50 to 60 °C.

Rinsing **S330** may be carried out in deionized water, preferably twice. Preferably still the temperature of the deionized water is 55 to 65 °C.

Drying **S340** is preferably performed under cool air, notably between 20 to 30 °C.

Just before use, the method may comprise removing remaining moisture from the coated ophthalmic wafer **11, 13.** Removing remaining moisture is preferably performed through conditioning the coated ophthalmic wafer **11, 13** at high temperature overnight. The temperature is preferably 70 to 90 °C, for example 80 °C. The duration of this conditioning is preferably 15 to 25 hours, preferably 17 too 24 hours.

Obtaining **S400** the lens substrate **12** may be carried out in a variety of ways.

Typically, obtaining **S400** the lens substrate **12** may comprise (Fig. 14):
forming **S410** a mold cavity;
forming **S420** the lens substrate inside the mold cavity.

Forming **S410** the mold cavity **41** may use a mold part **2** having a shaping face **21** and a mold edge **23** extending from the shaping face **21** (Fig. 5), and may comprise (Fig. 15):
placing **S411** the coated ophthalmic wafer at a desired distance from a mold part **2** having a forming face **21** and a mold edge **23** extending from the forming face **21,** so that the adhesion promotion layer **13** faces the forming face **21** or the mold part **2;**
adhering **S412** an adhesive tape **3** to both the wafer edge **113** and the mold edge **23,** thereby forming a mold assembly **4** with a mold cavity **41** between the adhesion promotion layer **13,** the shaping face **21** and the adhesive tape **3.**

Forming **S420** the lens substrate **12** may comprise (Fig. 16):
filling **S421** the mold cavity with the thermoset composition;
polymerizing **S422** the thermoset composition;
removing **S423** the mold part **2.**

Filling **S421** the mold cavity may be performed through a filter.

Before polymerizing **S422,** forming **S420** a lens substrate **12** may further comprise holding the mold assembly **4** for 5 to 15 min. Indeed, since oligomers have a higher viscosity and a faster rate of polymerization than monomers, it is better to wait a while after filling the mold cavity with oligomers to ensure that the filling line has disappeared before heating and starting the polymerization process and avoid defects.

Polymerizing **S422** the thermoset composition may be performed at a temperature of 100 to 150 °C, preferably 110 to 130 °C. The duration may be 2 to 4 hours, preferably 2.5 to 3.5 hours.

The method may further comprise annealing **S500** the obtained ophthalmic article, for example at a temperature of 100 to 150 °C, preferably 110 to 130 °C. The duration may be 0.5 to 1.5 hours. Annealing is a heat treatment which enables to release internal stresses remaining in the ophthalmic article after polymerizing. One purpose of annealing is to make sure that the resulting annealed material has no physical deformations, cracks or any kind of damage.

The method may further comprise hard coating **S600** the second face **112** of the ophthalmic wafer **11.**

When the ophthalmic article **1** has a second substrate, the method further comprises: forming **S700** an second adhesion promotion layer **13** as described above on the second face **112** of the ophthalmic wafer **11;** and
obtaining **S800** a second lens substrate **13** onto the second adhesion promotion layer **13** using the same thermoset composition or a different thermoset composition.

In such case, forming **S700** the second adhesion promotion layer **13** may be carried out the same way as forming **S300** the first adhesion promotion layer as described above. The composition of the adhesion promoter of the second adhesion promotion layer may be the same or different from the composition of the adhesion promoter of the first adhesion promotion layer. Both adhesion promotion layers may be formed concomitantly or successively.

Obtaining **S800** a second lens substrate may be performed the same way as obtaining **S400** the first lens substrate, substituting the ophthalmic wafer **11** with the mold assembly **4** and using a second mold part.

### Examples

**Example 1.** In this example, an ophthalmic article **10** is made with γ-aminopropyltriethoxysilane as the adhesive promoter.

The thermoset composition is obtained as follows.

Isocyanate oligomer composition. M-xylylene diisocyanate as the diisocynate monomer and 2,3-bis((2-mercaptoethyl)thio)-1-propanethiol as the thiol monomer are heated to a reaction temperature of 118 °C then mixed at a functional group ratio (isocyanate:thiol) of 7:1. The reaction is allowed to proceed at the reaction temperature for 3.5 hours, then cooled to room temperature and store in refrigerator.

Thiol oligomer composition. The diisocynate monomer and the thiol monomer are heated to a reaction temperature of 95 °C then mixed at a functional group ratio (isocyanate:thiol) of 1:6. The reaction is allowed to proceed at the reaction temperature for 3.5 hours, then cooled to room temperature. Further thiol monomer is added into the mixture so that the functional group ratio (isocyanate:thiol) becomes 1:8. Then the mixture is stirred for 1 hour at room temperature and stored in refrigerator.

Part A. An alkoxylated phosphate ester as a releasing agent is mixed with the isocyanate oligomer composition. The resulting mixture is stirred and degassed at a temperature of 2 to 4 °C for 1 hour. Then, stirring is stopped and the mixture is further degassed at a temperature of 2 to 4 °C for 15 min.

Part B. A catalyst composition comprising 18-crown-6, 2-mercaptoethanol and potassium thiocyanate, is mixed with the thiol oligomer composition. The resulting mixture is stirred and degassed at a temperature of 2 to 4 °C for 1 hour. Then, stirring is stopped and the mixture is further degassed at a temperature of 2 to 4 °C for 15 min.

Thermoset composition. Part A is mixed with Part B. The resulting mixture is stirred and degassed at a temperature of 2 to 4 °C for 5 min. Then stirring is stopped and the mixture is further degassed at a temperature of 2 to 4 °C for 2 min.

The composition of the thermoset composition is summed up in the following table.

| | | |
|---|---|---|
| Isocyanate oligomer composition | 52.44 wt.% | Part A |
| Releasing agent | 0.08 wt.% | |
| Thiol oligomer composition | 47.56 wt.% | Part B |
| Catalyst | 0.30 wt.% | |
| **Total** | 100 wt.% | |

A mold assembly if formed as described above and the mold cavity is filled with the thermoset composition. Then, the mold assembly is held for 10 min before polymerizing the thermoset composition at 120 °C for 3 hours. The mold part is subsequently removed and the obtained ophthalmic article is annealed at 120 °C for 1 hour.

**Comparative example 1.** Another ophthalmic article is preferred as described above without coating the ophthalmic wafer with any adhesive promoter.

### Tests

**Haze.**

The haze value of the ompthalmic article was measured by light transmission utilizing the Haze-Guard Plus haze meter from BYK-Gardner (a color difference meter) according to the method of ASTM D1003-00. The instrument was first calibrated according to the manufacturer's instructions. Next, the sample was placed on the transmission light beam of the pre-calibrated haze meter and the haze value was recorded in the center. As haze is a measurement of the percentage of transmitted light scattered more than 2.5° from the axis of the incident light, the higher the haze value, the higher the degree of cloudiness. Haze values are measured for an encapsulated microlens having 8 mm thickness at the center.

The following table shows the results of the transmittance and haze measurement for Example 1 and Comparative example 1.

| | Example 1 | Comparative example 1 |
|---|---|---|
| Transmittance (%TvD65) | 84.23 | 84.84 |
| Haze | 4.5 | 4.4 |

Thus, it can be seen that Example 1 and Comparative example 1 show similar values for the transmittance and haze. This demonstrates that the addition of the adhesion promotion layer does not deteriorate the optical properties of the obtained ophthalmic article.

**Adhesion through impact.** Adhesion between the ophthalmic wafer and the lens substrate was tested through an impact resistance assay. Example 1 and Comparative example 1 are beforehand are surfaced so that they are in a state which is closer to real use. The ophthalmic articles are placed on a base. A missile pin (500 g) was dropped tip down from a 127 cm height through a loose fitting guide tube with a smooth internal surface to impact the ophthalmic articles on the base, at the center thereof.

The results show that the whole ophthalmic article of Comparative example 1 became opaque following the test showing that the lens substrate was detached from the ophthalmic wafer. By contrast, large clear portions remain in the ophthalmic article of Example 1, showing that adhesion between the ophthalmic wafer and the lens substrate was still effective there.

**Adhesion through surfacing.** Adhesion between the ophthalmic wafer and lens substrate of Example 1 was also tested through surfacing. The ophthalmic article was blocked through its convex side, which is the position of the ophthalmic wafer. Then the concave side, which is the position of the lens substrate, was slide-cut to create a target final geometry. During surfacing, the ophthalmic article is subjected to high shear stress for a substantial period of time.

No delamination was observed at the end of the surfacing process.

**Hard coating test.** The ophthalmic article of Example 1 was subjected to the hard coating process to verify that it can survive it. As in the previous test, Example 1 first underwent surface preparation and then hard coating.

This test showed that no defects were found on the ophthalmic article after surface preparation and after hard coating.

## Claims

1. An ophthalmic article (10) comprising:
an ophthalmic wafer (11) with a first face (111), a second face (112) opposite the first face and microstructures(114), the microstructures being either on the first face or between the first face and the second face;
an adhesion promotion layer (13) on the first face of the ophthalmic wafer;
a lens substrate (12) in contact with the adhesion promotion layer;
wherein the adhesion promotion layer comprises an adhesive promoter having at least one of the following functional groups: -NH₂, -SH, -NCO and -OH.

2. The ophthalmic article of claim 1, wherein the ophthalmic wafer is made of a thermoplastic resin or a thermoset resin.

3. The ophthalmic article of claim 1 or claim 2, wherein the microstructures are microlenses.

4. The ophthalmic article of any one of claims 1 to 3, wherein the first face is a concave face or a convex face.

5. The ophthalmic article of any one of claims 1 to 4, wherein the adhesive promoter is a silane, preferably γ-aminopropyltriethoxysilane.

6. The ophthalmic article of any one of claims 1 to 5, further comprising a hard coat on the second face of the ophthalmic wafer.

7. The ophthalmic article of any one of claims 1 to 5, further comprising a second adhesion promotion layer on the second face of the ophthalmic wafer and a second lens substrate on the second adhesion promotion layer, wherein the second adhesion promotion layer comprises an adhesive promoter having at least one of the following functional groups: -NH₂, -SH, -NCO and -OH.

8. A method for manufacturing the ophthalmic article of any one of claims 1 to 7, comprising:
providing (S100) an ophthalmic wafer having a first face, a second face opposite the first face and microstructures, the microstructures being either on the first face or between the first face and the second face;
forming (S300) an adhesion promotion layer on the first face of the ophthalmic wafer with an adhesion promotion composition;
obtaining (S400) a lens substrate against the adhesion promotion layer;
wherein the adhesion promotion composition comprises an adhesive promoter having at least one of the following functional groups: -NH₂, -SH, -NCO and -OH.

9. The method of claim 8, wherein the adhesive promoter is a silane, preferably γ-aminopropyltriethoxysilane.

10. The method of claim 8 or claim 9, wherein the ophthalmic wafer comprises a wafer edge between the first face and the second face, and wherein forming an ophthalmic layer comprises:
providing a mold part having a forming face and a mold edge extending from the shaping face;
forming (S410) a mold cavity between the adhesion promotion layer and the shaping face by taping the wafer edge and the mold edge together with an adhesive tape;
filling (S421) the mold cavity with a thermoset composition; and
polymerizing (S422) the thermoset composition thereby obtaining the lens substrate.

11. The method of claim 10, wherein the thermoset composition comprises an isocyanate compound, a thiol compound, a catalyst, and a releasing agent.

12. The method of claim 11, wherein the isocyanate compound is an isocyanate monomer and the thiol compound is a thiol monomer; wherein the thermoset composition further comprises a UV absorber compound and a bluing agent.

13. The method of claim 11, wherein the isocyanate compound is an isocyanate oligomer and the thiol compound is a thiol oligomer.

14. The method of any one of claims 8 to 13, further comprising hard coating the second face of the ophthalmic wafer with a hard coat.

15. The method of any one of claims 8 to 13, further comprising:
forming a second adhesion promotion layer on the second face of the ophthalmic wafer using a second adhesion promotion composition; and
forming a second lens substrate against the second adhesion promotion layer.
